# EUROPEAN PATENT SPECIFICATION

(11) **EP 0 758 482 B1**
(45) Date of publication and mention of the grant of the patent: **05.03.2003**
(21) Application number: 94930583.3
(22) Date of filing: 04.10.1994
(51) Int. Cl.: H01G 4/018, H01G 4/32, B32B 27/28, B05D 3/08, B05D 3/04, B65D 23/08

(54) **CROSS-LINKED ACRYLATE COATING MATERIAL USEFUL FOR FORMING CAPACITOR DIELECTRICS AND OXYGEN BARRIERS**
VERNETZTES ACRYLATBESCHICHTUNGSMATERIAL ZUR HERSTELLUNG VON KONDENSATORDIELEKTRIKA UND SAUERSTOFFBARRIEREN
MATERIAU DE REVETEMENT A BASE D'ACRYLATE RETICULE UTILE POUR FORMER DES DIELECTRIQUES DE CONDENSATEUR ET DES BARRIERES A L'OXYGENE

(30) Priority: 04.10.1993 US 131328; 15.04.1994 US 228579
(43) Date of publication of application: 19.02.1997
(60) Divisional application: 96200813.2
(73) Proprietor: 3M Innovative Properties Company, St. Paul, Minnesota 55133-3427 (US)
(72) Inventor: SHAW, David, G., Tucson, AZ 85718 (US); DAWSON, Eric, Tucson, AZ 85737 (US); CLINE, Daniel, Tucson, AZ 85737 (US); LANGLOIS, Marc, Tucson, AZ 85715 (US)
(74) Representative: Enskat, Michael Antony Frank
(86) International application number: PCT/US94/11257
(87) International publication number: WO 95/010117

(56) References cited:
- EP-A- 0 475 441
- US-A- 3 993 811
- US-A- 4 229 777
- US-A- 4 320 437
- US-A- 4 499 520
- US-A- 4 722 515
- US-A- 4 728 701
- US-A- 4 842 893
- US-A- 4 919 985
- US-A- 4 954 371
- US-A- 5 280 084

## Description

This invention relates to deposition of barrier films for inhibiting penetration by oxygen or other gases. It also relates to high-voltage capacitors and the material employed for fabricating such capacitors. Techniques for acrylate deposition and adhesion are also improved.

Many products, including many food products, are packaged in thin plastic sheet bags or the like. The thin films are desirably resistant to permeation by oxygen water vapor and odorous gases.

Such barrier films are commonly made of costly plastics because less costly films are too permeable to oxygen or water to give a long shelf life. Reduced cost barrier films are highly desirable.

There are many products that are packaged in plastic bottles, tubes or vials which also need protection from oxidation or contamination by environmental gasses or which must be in impermeable containers to that components of the contents are not lost by diffusion through the containers.

US Patent no. 3 993 811 describes a thermal insulating panel comprising a double wall construction of structural plastic material. At least one surface of each wall of the panel is metallised with metal such as silver to provide a light reflective surface. The metallised surface is coated with a barrier plastic such as vinylidene chloride polymer. The space between the walls of the panel is evacuated and an gas-adsorbing material used.

Electrical capacitors are used for storing energy in a variety of applications. Operating voltages for such devices range from a few volts, such as those used in miniature electronic circuits, to thousands of volts, such as those used in power utility applications.

For low and medium voltages (generally below 600 volts) metallised sheet dielectrics are commonly used. Higher voltage capacitors are generally constructed of aluminum foil electrodes and sheet dielectric material such as a thermoplastic polypropylene and polyester film. Capacitors intended for service at more than about 600 volts are completely impregnated with a dielectric liquid with good gas absorbing properties. Typical dielectric liquids with good gas absorbing properties are PXE (phenyl xylyl ethane), MIPB (mono isopropyl biphenyl), DOP (dioctyl phthalate), castor oil, polypropylene glycol and mineral oil.

High voltage capacitors have not been able to take advantage of the self healing properties of metallised electrodes. The dielectric liquid causes swelling of the thermoplastic sheets, which causes cracking of the thin film metal electrode and an open circuit quickly develops. It would be desirable to have wound capacitors made with metallised film for higher voltages where self healing can occur, and often where it is necessary that the capacitor be filled.

There are, therefore, provided methods for forming a barrier with low oxygen and water permeability which are defined by the features of claims 1 or 9, respectively.

The surface of the thermoplastic substrate is prepared for deposition of the acrylate by either heating the surface of the substrate above its melting point without deforming the substrate or by plasma treating the surface for enhancing adhesion of the acrylate. Chilling the substrate enhances deposition efficiency.

The acrylate layers are formed by evaporating an acrylate monomer having a molecular weight in the range of from 150 to 600, preferably in the range of from 200 to 400, and condensing the monomer on a face of the sheet substrate as a monomer film. The acrylate monomer is then polymerized for forming the acrylate layer. The acrylate may also be a blend of acrylate monomers comprising at least one monomer having a molecular weight in the range of from 150 to 400 and an acrylate having a molecular weight of more than 600.

FIG. 1 illustrates schematically a metallized sheet capacitor constructed according to principles of this invention.

FIG. 2 illustrates in three transverse cross sections materials suitable for winding a capacitor, FIG. 2a illustrating two coated sheets as used in a capacitor, FIG. 2b illustrating a sheet coated on only one face, and FIG 2c illustrating a sheet with the coating sequence reversed.

FIGs. 3, 4 and 5 illustrate, in fragmentary transverse cross section, other embodiments of material suitable for winding capacitors.

FIG. 6 is a schematic illustration of coating apparatus for forming such a capacitor sheet material.

FIG. 7 is a graph with the axes representing acrylate shrinkage and layer thickness, respectively.

FIG. 8 is a graph illustrating condensation efficiency as a function of temperature.

FIG. 9 is a fragmentary cross section of a capacitor made with metallized sheet coated with a polymerized acrylate.

FIG. 10 illustrates in transverse cross section a coated polypropylene with low oxygen permeability.

FIG. 11 illustrates in transverse cross section a coated thermoplastic substrate with low oxygen permeability.

FIG. 12 illustrates an exemplary container constructed according to principles of this invention.

FIG. 13 is a schematic illustration of apparatus for coating substrates by spraying.

FIG. 14 is a schematic illustration of coating apparatus for forming a barrier sheet material.

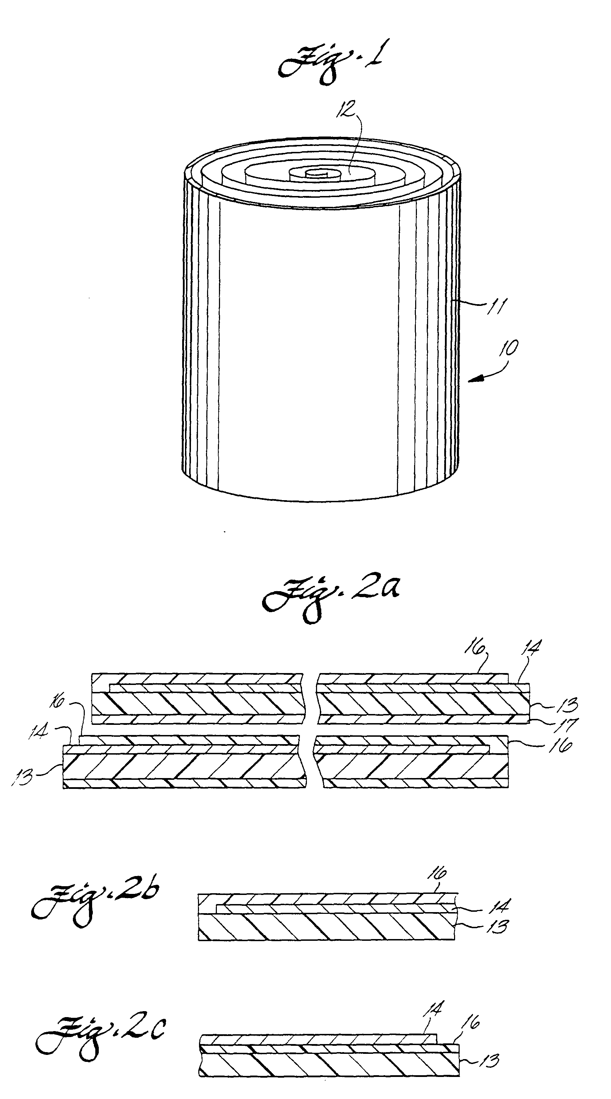

An exemplary capacitor 10 comprises a can 11, the end of which is cut away in FIG. 1 to show the roll of capacitor material 12 inside the can. The layers of material forming the capacitor are wound into a cylindrical roll. In effect, the roll of capacitor material comprises alternating layers of metal and dielectric coiled in a tight spiral. The metal layers form the electrodes of the capacitor and the dielectric material between the electrodes permits accumulation of charge in the capacitor. Such a capacitor, intended for use at higher voltages, may be filled with a dielectric liquid such as those mentioned above.

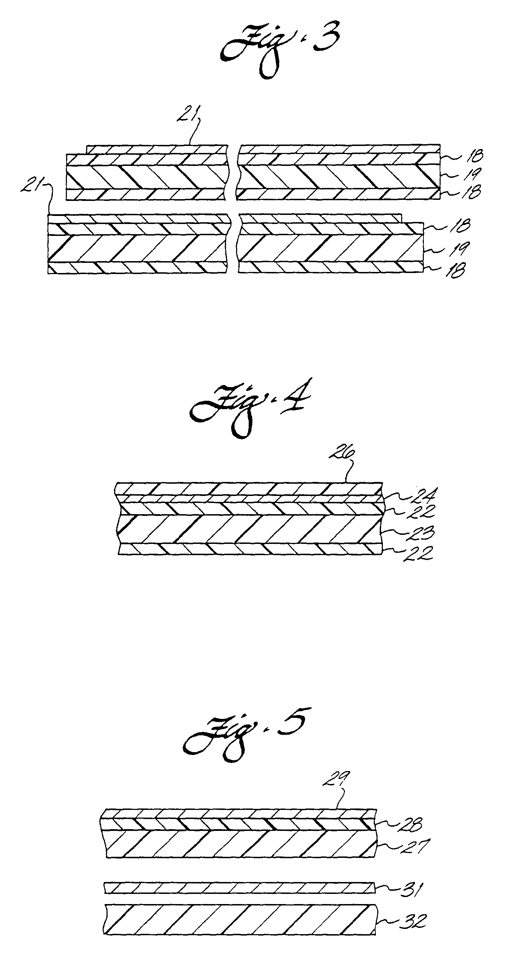

FIG. 2 illustrates in three fragmentary transverse cross sections exemplary materials for winding such a capacitor. A sheet suitable for winding a capacitor has a thermoplastic substrate 13 such as thin polypropylene or polyester sheet which has a stable dielectric constant and high dielectric strength. A layer of metal 14 which may be vacuum deposited or sputtered is formed on at least one face of the substrate. A layer of polymerized acrylate 16 is deposited either over or under the metal layer as described hereinafter. In the embodiment illustrated in FIG. 2a, another layer of polymerized acrylate 17 is formed on the opposite face of the substrate.

The two sheets of material suitable for forming a capacitor are illustrated in FIG. 2a as they are sometimes used in capacitors. Each sheet has a portion of the metallized layer 14 exposed along an edge of the sheet. That is, a portion of the metallized layer is not covered by an insulating layer of acrylate in this embodiment. These exposed edges of the metal layer are at opposite edges of adjacent sheets in the capacitor and provide an area to which electrical contact can be made so that alternate sheets of the capacitor material form the opposite plates of the capacitor.

FIG. 2b illustrates another embodiment of sheet for forming a rolled capacitor. Here a layer of metal 14 is deposited on the substrate 13 and a layer of polymerized acrylate 16 is formed over the metal layer. The entire metal layer is covered with acrylate. Only one face of the substrate has a coating of acrylate.

The embodiment illustrated in FIG. 2c reverses the layers on the substrate. In this embodiment there is a layer of polymerized acrylate 16 formed directly on the substrate 13. In direct contact with and over the acrylate layer is a deposited layer of metal 14. Again, there is no acrylate layer on the opposite face of the substrate. The metal may extend all the way to each edge of the sheet or may be spaced a short distance from the edge of the sheet along one edge.

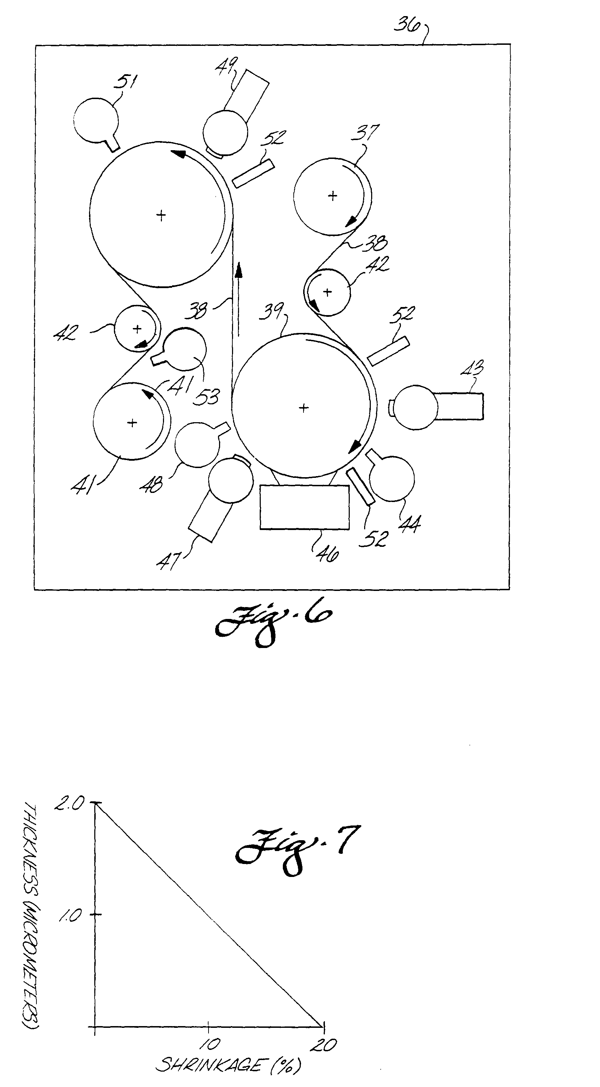

FIG. 3 illustrates a variation of the capacitor material having a layer of polymerized acrylate 18 on each face of a thermoplastic substrate 19. A layer of metal 21 is deposited on top of one of the acrylate layers.

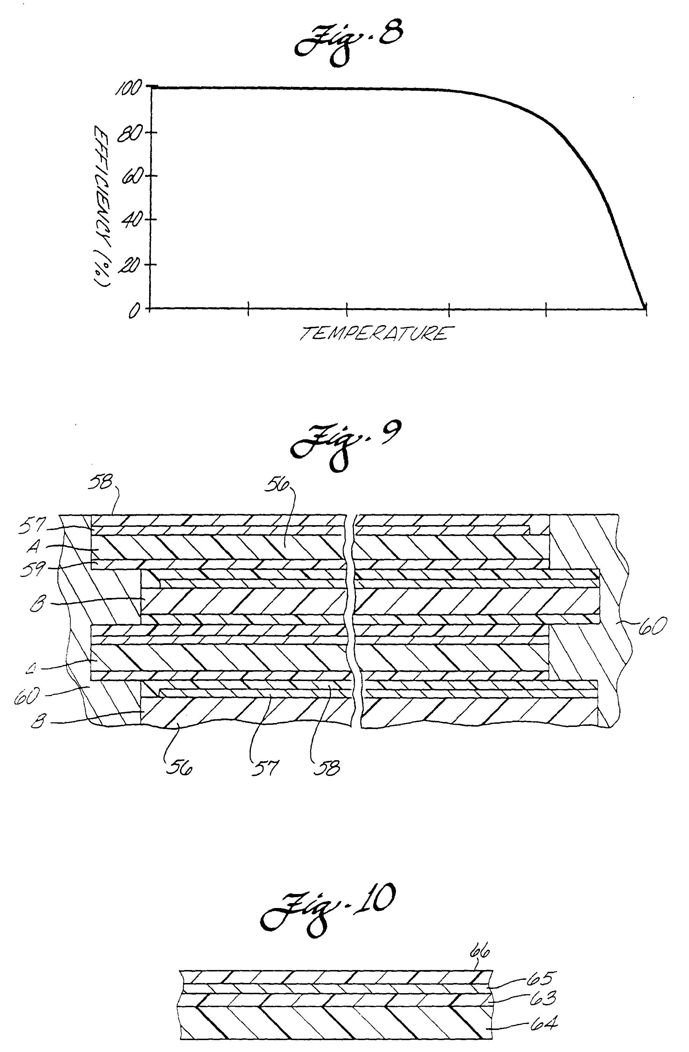

FIG. 4 illustrates another slight variation from an embodiment as illustrated in FIG. 3, having a layer of polymerized acrylate 22 on each face of a substrate 23. A layer of metal 24 is deposited over at least one of the acrylate layers. A third layer of polymerized acrylate 26 is formed over the layer of metal. Any of these variations may be used for forming capacitors.

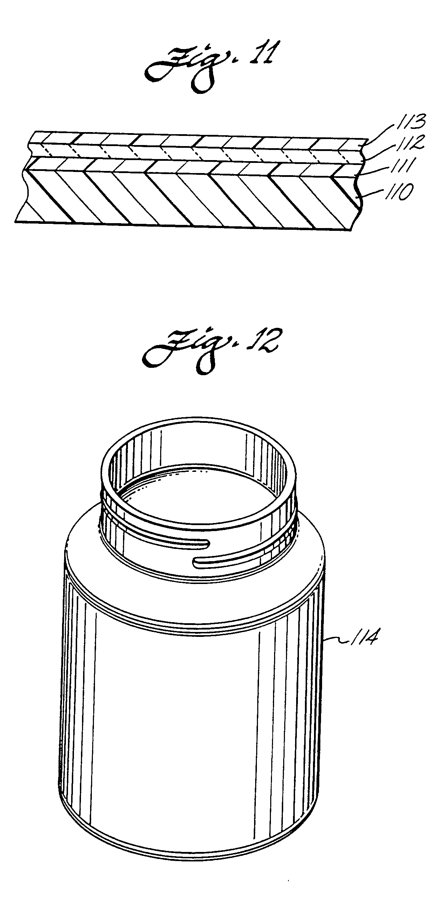

It is not always required that a capacitor be formed with both electrodes being metallized sheets of dielectric material. Thus, for example, as illustrated in FIG. 5, a capacitor may have one electrode formed on a thermoplastic substrate 27. A layer of polymerized acrylate 28 is formed on each face of the substrate. A layer of metal 29 is deposited for forming the one electrode. The other electrode in such a capacitor comprises a sheet of aluminum foil 31. That electrode may be separated from an adjacent layer of metal (not shown) on another substrate via a sheet 32 of dielectric materials such as polypropylene.

As mentioned above, the polypropylene and polyester materials are desirable as dielectrics for capacitors since they have a stable dielectric constant and high dielectric strength. If a metallized polypropylene, for example, is tried in a liquid filled capacitor, the thermoplastic apparently swells and ruptures the thin metallized layer. By having a very thin layer of polymerized acrylate in direct contact with the metallized electrode, the damage caused by dielectric liquid can be avoided. It is believed that the thermoset acrylate supports or stabilizes the metal film and prevents cracking despite swelling of the film substrate.

If the acrylate layer is over the metal layer, it protects the metal layer from corrosion. Although it does not appear to be necessary for forming certain capacitors, if both faces of the dielectric sheet are coated with a layer of cured acrylate, the polymer film between the layers is isolated from dielectric liquid in a capacitor, and swelling is avoided.

An exemplary barrier material as illustrated in FIG. 11 comprises a thermoplastic substrate 110 having a cross-linked acrylate layer 111 on one face. The acrylate layer is overlain by a layer 112 of oxygen barrier material. A final cross-linked acrylate layer 113 is optionally formed over the oxygen barrier layer.

It has been discovered that polyethylene, polypropylene, polyester or nylon substrates with thin surface coatings of crosslinked acrylate have very low oxygen and water permeability when combined with a metal or inorganic barrier coating. Typical sheets for packaging foodstuffs include metallized polypropylene, nylon or polyester sheet. Metallized nylon has an oxygen permeability of about 0.05 ml/100 in²/hour (0.05 ml/645 cm²/hour) as measured with a Mocon Oxtran System available from Modern Controls, Minneapolis, Minnesota. Metallized polyester has a typical oxygen permeability of about 0.08. Metallized polypropylene, on the other hand, has an oxygen permeability of about 2.5 and is not usually suitable for packaging where low oxygen permeability is important.

It is believed that the high oxygen permeability of metallized polypropylene is due to the inherent surface roughness of the polypropylene sheet. Nylon and polyester sheets are considerably smoother and have a higher temperature capability than polypropylene. A metal coating of uniform thickness can be readily applied as a good oxygen barrier. A layer of acrylate about 1/2 to one micrometer thick is adequate for smoothing the surface for producing a low oxygen permeability.

Sheet polypropylene without any coating may have an oxygen permeability of about 100. However, if a layer of aluminum is applied to a surface of a polypropylene sheet substrate, the oxygen permeability decreases to about 2.5. Surprisingly, when an acrylate layer only about one micrometer thick is formed on the polypropylene and then covered with a layer of metal, the oxygen permeability drops to about 0.05, a value lower than metallized polyester. It is hypothesized that the film of liquid acrylate monomer deposited on the surface of the polypropylene has a smooth, high temperature surface and the surface remains smooth when the acrylate is polymerized. The metallized layer can then form a good oxygen barrier.

First, a layer of acrylate monomer is deposited on the substrate and crosslinked. The acrylate layer is then coated with an oxygen barrier layer of SiOₓ or Al₂O₃, both of which have good resistance to oxygen permeability. The high temperature resistance of the crosslinked acrylate layer permits the notably higher temperature deposition of silicon oxide or aluminum oxide on the thermoplastic substrate. Other deposited barrier films may be formed of nitrides or silicides that can be vacuum or vapor deposite. For example, silicon nitride, aluminum nitride, or titanium nitride may be used. The materials need not be stoichiometric compounds and often are substoichiometric with excess metal.

A still greater surprise occurs when another polymerized acrylate layer is formed over the oxygen barrier layer. The permeability through a polypropylene barrier material drops to about 0.002 which is appreciably better than the oxygen permeability of metallized nylon. It is hypothesized that the second acrylate layer may protect the metallized layer and assure retention of the oxygen barrier properties of the metal.

A preferred composite material with low oxygen permeability has a layer of polymerized acrylate, a layer of barrier material such as SiOₓ, Al₂O₃, silicon nitride, titanium nitride or aluminum nitride and another layer of polymerized acrylate on a thermoplastic substrate. The layers of acrylate reduce permeability dramatically and the layer overlying the barrier material protects the barrier material from mechanical damage and also provides a surface suitable for printing.

The substantial improvement in oxygen permeability is believed to be attributable to formation of a liquid film of monomer on the surface of the polypropylene, followed by cross linking of the polyfunctional acrylate. Adding a second layer of acrylate monomer which is polymerized in situ is believed to rectify any defects in the underlying layers and provide an additional thickness of material with inherently low oxygen permeability. Redundant layers minimize pinhole leakage.

A particularly useful barrier sheet may be formed with multiple layers of acrylate and oxygen barrier. Several thin layers of such materials are more effective than a couple thicker layers with the same total thickness. For example, a sheet may be coated with a layer of cross linked acrylate about 0.5 micrometers thick followed by a layer of metal or other oxygen barrier about 0.1 micrometer thick. Subsequent layers of acrylate and metal are built up, preferably with the final layer being acrylate. The thin layers of acrylate between layers of metal reduce the lateral flow of oxygen in the layers and minimize permeability. Such an arrangement is particularly useful as an oxygen barrier on bottles or vials.

Although it is generally preferred to deposit a layer of acrylate on the substrate, followed by a layer of oxygen barrier material, oxygen permeability can be sharply reduced with a layer of metal deposited directly on the substrate, followed by a layer of acrylate.

The polymerized acrylate layer is believed to be beneficial for a number of other reasons. As a thermoset material, it has higher temperature resistance than the thermoplastic substrate. In the coating process, the product is subjected to elevated temperature processing such as metallizing, plasma treatment and the like. A cured acrylate coating would not have vapor emissions and may seal the surface and inhibit emission of materials from a thermoplastic substrate.

It is particularly preferred to vaporize an acrylate prepolymer and deposit it on a substrate in a vacuum system since this technique serves to refine the acrylate. In effect, the vaporization and deposition process is a vacuum distillation which removes volatiles to the vacuum pumps and deposits only higher molecular weight acrylates on the substrate. Removal of volatiles is desirable for subsequent high temperature processing of the material such as in deposition of metal or other inorganic barrier films.

After any of these deposition techniques, the monomer film is irradiated with ultraviolet or an electron beam to cause polymerization of the acrylate to form a monolithic crosslinked layer. Polymerization by irradiation is a conventional practice and the electron flux required or wavelength and total flux of ultraviolet used are commonly known. A photoinitiator may be included in the acrylate for facilitating polymerization by ultraviolet radiation.

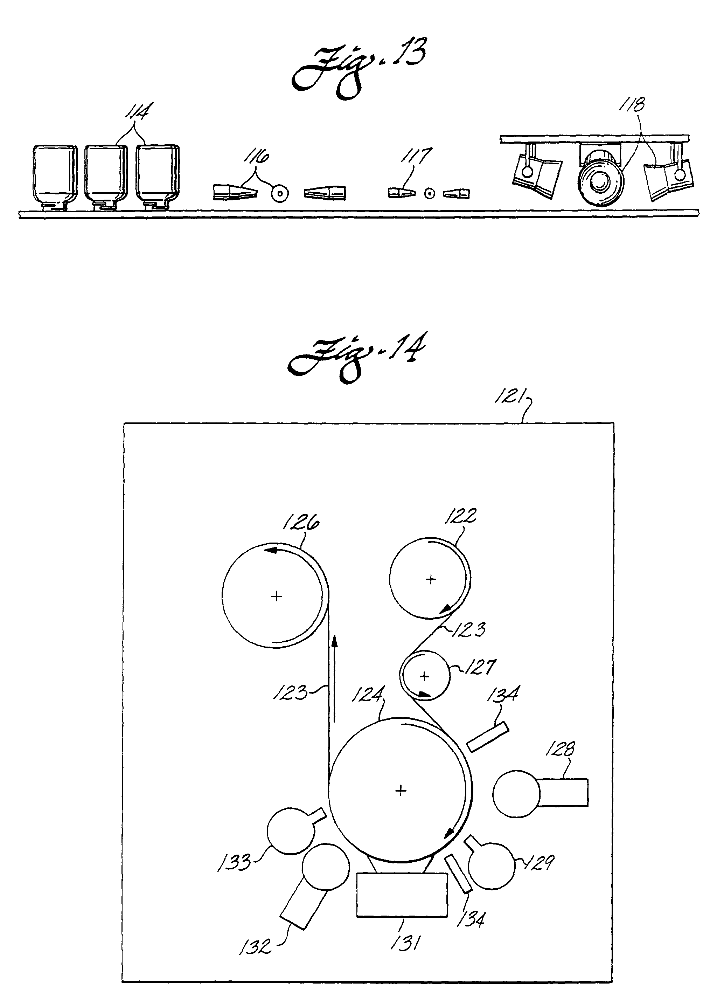

A suitable apparatus for coating the substrate with acrylate and metal layers is illustrated schematically in FIG. 6. All of the coating equipment is positioned in a conventional vacuum chamber 36. A roll of polypropylene, polyester or nylon sheet is mounted on a pay-out reel 37. The sheet 38 forming the substrate is wrapped around a first rotatable drum 39, around a second rotatable drum 40, and fed to a take-up reel 41. Idler rolls 42 are employed, as appropriate, for guiding the sheet material from the payout reel to the drums and to the take-up reel.

A flash evaporator 43 is mounted in proximity to the drum at a first coating station. The flash evaporator deposits a layer or film of acrylate monomer on the substrate sheet as it travels around the drum. After being coated with acrylate monomer the substrate sheet passes an irradiation station where the acrylate is irradiated by a source 44 such as an electron gun or source of ultraviolet radiation. The radiation or electron bombardment of the film induces polymerization of the acrylate monomer.

The sheet then passes a metallization station 46 where a coating of metal for an electrode is applied by vacuum metallizing or sputtering. The sheet then passes another flash evaporator 47 where another layer of acrylate monomer is deposited for forming a protective layer over the metal. This layer of monomer is cured by irradiation from an ultraviolet or electron beam source 48 adjacent the drum. Depending on whether a layer of acrylate is above or below the metal layer, either of the evaporators 43 or 47 may be used. Clearly, if the metal layer is to be sandwiched between layers of acrylate, both evaporators and their respective radiation sources are used.

An exemplary process for coating a container can be described as follows. The container is injection molded or blow molded in a conventional manner from a conventional thermoplastic material. Preferably the container is then flame treated for activating and smoothing the surface. It has been found that adhesion of an acrylate layer on the substrate is enhanced by activating the surface by plasma or flame treating. High temperature air may also be used.

In a typical production line, a row of containers 114 are moved successively through a flame treating station, a coating station and a curing station. In the flame treating station, the containers are bathed in the flames from a plurality of propane or natural gas torches 116. In addition to activating the surface for enhanced adhesion, the flame treating can significantly smooth the surface of the container to assure that there is complete coverage by subsequent coatings. The flame is applied to the surface with sufficient intensity to soften or melt a thin surface layer on the container.

The flame treatment melts and rounds off any molding flash and smooths mold marks on the container so that the coating can bridge surface irregularities. "Melting" may almost be considered a misnomer since the thermoplastic materials are effectively supercooled liquids. Thus, melting is considered to be sufficient softening of the surface for smoothing irregularities.

Such an acrylate layer is applied in a coating-station where one or more nozzles 117 sprays a thin coating of acrylate monomer onto the surface. Such a sprayed coating may be in the order of from one to twenty micrometers thick, for example. The acrylate sprayed onto the surface may be a low viscosity monomer or if desired, a monomer and/or a low molecular weight polymer may be combined with a solvent for spraying. In the event the acrylate is to be cross-linked by ultraviolet irradiation, a photoinitiator may be included in the sprayed composition.

An alternative to spraying the surface of the container with acrylate comprises dipping the container into a liquid acrylate composition.

Following the coating station, the containers pass a curing station where a plurality of ultraviolet lamps 118 irradiate the acrylate layer and cause cross-linking.

Following the application of an acrylate layer to the containers, an oxygen barrier layer is applied. Preferably this is by deposition in a vacuum chamber. A metal barrier layer, e.g. aluminum, may be applied by vacuum metallizing or sputtering. A layer of silicon oxide, aluminum oxide, silicon nitride or other such material may be deposited by a plasma assisted chemical vapor deposition technique. For example, SiOₓ may be deposited by a plasma vapor deposition process using an oxidizing or inert carrier gas. Aluminum oxide can be deposited by electron beam evaporation or preferably by evaporation of aluminum which is converted to an oxide in an oxygen plasma.

An alternative technique for depositing an acrylate layer is in a vacuum chamber. Suitable apparatus for coating a sheet substrate with acrylate and oxygen barrier layers is illustrated schematically in FIG. 14. All of the coating equipment is positioned in a conventional vacuum chamber 121. A roll of polypropylene, polyester or nylon sheet is mounted on a pay-out reel 122. The sheet 123 forming the substrate is wrapped around a rotatable drum 124 and fed to a take-up reel 126. Idler rolls 127 are employed, as appropriate, for guiding the sheet material from the payout reel to the drum and to the take-up reel.

A flash evaporator 128 is mounted in proximity to the drum at a first coating station. The flash evaporator deposits a layer or film of acrylate monomer on the substrate sheet as it travels around the drum. After being coated with acrylate monomer the substrate sheet passes an irradiation station where the acrylate is irradiated by a source 129 such as an electron gun or source of ultraviolet radiation. The UV radiation or electron bombardment of the film induces polymerization of the acrylate monomer.

The sheet then passes a deposition station 131 where a coating of oxygen barrier material is applied by plasma deposition, vacuum deposition or the like. The sheet then passes another flash evaporator 132 where another layer of acrylate monomer is deposited for forming a protective layer over the oxygen barrier. This layer of monomer is cured by irradiation from an ultraviolet or electron beam source 133 adjacent the drum. The coated sheet is then wrapped up on the take-up reel 126.

Evaporation of the monomer is preferably from flash evaporation apparatus 129, 132 as described in U.S. Patents Nos. 4,722,515, 4,696,719, 4,842,893, 4,954,371 and/or 5,097,800. These patents also describe polymerization of acrylate by radiation. In such flash evaporation apparatus, liquid acrylate monomer is injected into a heated chamber as droplets. The elevated temperature of the chamber vaporizes the droplets to produce a monomer vapor. The monomer vapor fills a chamber with a longitudinal slot forming a nozzle through which the monomer vapor flows.

Two styles of evaporator are suitable. In one of them, the orifice for injecting droplets and flash evaporator are connected to one end of the nozzle cylinder. In the other style, the injector and flash evaporator section is attached in the center of the nozzle chamber like a T.

It is often found desirable to plasma treat the surface to be coated immediately before coating. A conventional plasma gun 134 is positioned in the vacuum chamber upstream from each of the flash evaporators 128 and 132 for activating the surface of the sheet on a continuous basis before monomer deposition. Conventional plasma generators are used.

Surface treatment within the vacuum chamber is of substantial importance for all surfaces, not just the surface of the raw film. Referring again to FIG. 6, a conventional plasma gun 52 is positioned in the vacuum chamber upstream from each of the flash evaporators 43 and 49 for activating the surface of the sheet on a continuous basis before monomer deposition. Another plasma gun 52 is provided immediately before the vacuum metallizing station 46. Conventional plasma generators are used.

In an exemplary embodiment the plasma generator is operated at a voltage of about 500 to 1000 volts with a frequency of about 50 Khz. Power levels are in the order of 500 to 3000 watts. For an exemplary 50 cm wide film traveling at a rate of 30 to 90 meters per minute, around 500 watts appears appropriate.

An analogous system may be employed for coating containers with layers of acrylate and barrier material. The containers are moved successively through an acrylate evaporation and condensation station and a deposition station. If two layers of acrylate are used the second acrylate may be applied by way of the same flash evaporator or by way of a second similar flash evaporator.

The acrylates used for forming the cross-linked coatings on the thermoplastic substrate differ somewhat depending on the technique used for depositing the coating. The acrylates used for dipping or spraying are similar and it is not necessary that the acrylate is a monomer. Generally, the acrylates used are blends of high and low molecular weight materials to yield the desired viscosity of the composition for dipping or spraying. Monomers with molecular weights in the order of 150 up to partially polymerized materials have a molecular weights in the order of 20,000 may be blended to obtain a low viscosity blend. There should be polyfunctional acrylates in the blend so that there is extensive cross-linking.

In the event the acrylate layers are applied by the evaporation and condensation technique, the range of suitable acrylates is more restricted. These acrylate resins are generally monomers having a molecular weight in the range of from 150 to 600. Preferably, the monomers have a molecular weight in the range of from 200 to 400. Higher molecular weight fluorinated acrylates or methacrylates may be equivalent to these lower molecular weight materials and also be used for forming a deposited acrylate layer. For example, a fluorinated acrylate with a molecular weight of about 2000 evaporates and condenses similar to a non-fluorinated acrylate having a molecular weight in the order of 300. The acceptable range of molecular weights for fluorinated acrylates is 400 to 3000. Fluorinated acrylates include monoacrylates, diacrylates, and methacrylates. Chlorinated acrylates may also be useful.

If the molecular weight is below about 150, the monomer is too volatile and does not condense well for forming a monomer film. If the molecular weight is more than about 600 the monomer does not evaporate readily in the flash evaporator at temperatures safely below the decomposition temperature of the monomer.

When the monomers polymerize, there may be shrinkage of the film. Excessive shrinkage may cause poor adhesion of the layer on the substrate. Shrinkage up to about 15 to 20% can be tolerated in the thin acrylate layers. However, it is preferred that the shrinkage be less than 10% for reliable coating adhesion.

A typical monomer used for flash evaporation includes an appreciable amount of diacrylate and/or triacrylate to promote crosslinking. Blends of acrylates may be employed for obtaining desired evaporation and condensation characteristics and adhesion, and for controlled shrinkage of the deposited film during polymerization.

Suitable monomers are those that can be flash evaporated in a vacuum chamber at a temperature below the thermal decomposition temperature of the monomer and below a temperature at which polymerization occurs in less than a few seconds at the evaporation temperature. The monomers selected should also be readily capable of crosslinking when exposed to ultraviolet or electron beam radiation.

The monomer composition may comprise a mixture of monoacrylates and diacrylates. Triacrylates tend to be reactive and may polymerize at the evaporation temperatures. Generally speaking, shrinkage is reduced with higher molecular weight materials.

Generally, it is desirable that at least a major portion of the acrylate monomer evaporated is a polyfunctional acrylate for crosslinking. Preferably, the acrylate comprises at least 70 percent polyfunctional acrylates such as diacrylate or triacrylate. If the degree of crosslinking is too low, the polymerized acrylate layer may not have adequate cure speed.

There are situations when less than half of the acrylate monomer comprises polyfunctional acrylates. For example, in a dry capacitor film one composition comprises about 80% monoacrylate and 20% diacrylate. The high proportion of monoacrylate is used since it has a high dielectric constant.

Preferably, the molecular weight of the acrylate monomer is in the range of from 200 to 400. If the molecular weight is less than about 200, the monomer evaporates readily, but may not condense quantitatively on the substrate without chilling of the substrate. If the molecular weight is more than about 400, the monomers become increasingly difficult to evaporate and higher evaporation temperatures are required.

Preferably, the acrylate monomer has a vapor pressure at 25°C in the range of from 1 to 20 micrometers of mercury. If the vapor pressure is less than about one micrometer, exceptionally high temperatures may be required to evaporate sufficient material for forming a coating on the substrate in reasonable coating time. High temperatures may lead to thermal decomposition or premature curing of the monomers. If the vapor pressure is higher than about twenty micrometers of mercury, condensation of the monomer to form a film on the substrate may have too low an efficiency for practical coating operations. Adequate efficiency may not be obtained until the surface of the substrate is cooled below the freezing point of the monomer, in which case the material may not polymerize properly.

There are at least five monoacrylates, ten diacrylates, ten to fifteen triacrylates and two or three tetraacrylates which may be included in the evaporated composition. Most preferably the acrylate comprises hexane diol diacrylate (HDDA) with a molecular weight of 226 and/or tripropylene glycol diacrylate (TRPGDA) with a molecular weight of about 300. Other acrylates may be used, sometimes in combination, such as monoacrylates 2-phenoxy ethyl acrylate (M.W. 192), isobornyl acrylate (M.W. 208) and lauryl acrylate (M.W. 240), epoxy acrylate RDX80095 made by Radcure of Atlanta, Georgia; diacrylates diethylene glycol diacrylate (M.W. 214), neopentyl glycol diacrylate (M.W. 212), propoxylated neopentyl glycol diacrylate (M.W. 328) and polyethylene glycol diacrylate, tetraethylene glycol diacrylate (M.W. 302), and bisphenol A epoxy diacrylate; and triacrylates trimethylol propane triacrylate (M.W. 296), ethoxylated trimethylol propane triacrylate (M.W. 428), propylated trimethylol propane triacrylate (M.W. 470) and pentaerythritol triacrylate (M.W. 298). Monomethacrylates isobornyl methacrylate (M.W. 222) and 2-phenoxyethyl methacrylate (M.W. 206) and dimethacrylates triethylene glycol dimethacrylate (M.W. 286) and 1,6-hexanediol dimethacrylate (M.W. 254) may also be useful, but may cure too slowly to be useful for high speed coating operations.

It has generally been considered that it is not feasible to evaporate high molecular weight acrylates because of their very low vapor pressure and high viscosity. Evaporated acrylate coatings have been restricted to low molecular weight monomers, generally below a molecular weight of about 400 and with low viscosity. Generally the viscosities are below 50 centistoke.

It has been found, however, that by mixing a very low and a very high viscosity material, flash evaporation, condensation and curing can be obtained. For example, a mixture of 70 percent tripropylene glycol diacrylate (TRPGDA) and 30 percent of beta carboxy ethyl acrylate (BCEA) has a viscosity of about 15 centistokes and can be readily evaporated, condensed and cured. The low viscosity component lowers the viscosity of the blend, which improves atomization in the evaporator and assists in the flash evaporation of the high viscosity acrylate.

When blends of high and low molecular weight acrylates are used, it is preferred that the weighted average molecular weight of the blend be in the range of from 200 to 600 and preferably up to about 400. This assures that there is good vaporization of the blend at reasonable temperatures in the evaporator.

Some examples of low molecular weight acrylates are hexane diol diacrylate, diethylene glycol diacrylate, propane diacrylate, butane diol diacrylate, tripropylene glycol diacrylate, neopentyl glycol diacrylate, phenoxyethyl acrylate, isobornyl acrylate and lauryl acrylate. Some examples of high molecular weight acrylates are bisphenol A diacrylate, BCEA, Radcure 7100 (an amine acrylate available from Radcure, Atlanta Georgia), Radcure 169, Radcure 170, acrylated and methacrylated phosphoric acid, Henkel 4770 (an amine acrylate available from Henkel Corporation, Ambler, Pennsylvania) and glycerol propoxy triacrylate.

Particularly preferred high molecular weight materials include BCEA which is acid in character and has a shrinkage of only about 4 percent upon curing. Another suitable material is an acrylate or methacrylate of phosphoric acid. One can also use acrylic acid in the composition, along with dimers, trimers and tetrameres of acidic acrylates or methacrylates. The molecular weight range of the acrylate may be extended by preheating the prepolymer before it is atomized into the vaporization chamber.

It has been found that the temperature of the substrate on which the monomer film is deposited can have a large influence on the efficiency of condensation. It is desirable to refrigerate the substrate before it is placed in the vacuum chamber. Good condensation efficiency can be obtained with monomers having a molecular weight of at least 200 with the substrate cooled to temperatures in the range from 0 to 15°C. A rack of containers to be coated can be removed from a refrigerator and placed in a vacuum chamber, pumped down and coated before the containers warm to unreasonably high temperatures.

It is also desirable to cool the rotating drums so that the substrate remains at a low temperature. When the sheet being coated is smooth and thin (generally less than 12 micrometers) good condensation efficiency can be obtained with monomers having a molecular weight of at least 200 with the coating drum cooled to temperatures in the range from 0 to 15°C.

Fig. 8 includes a series of data points showing measured condensation efficiencies of hexane diol diacrylate monomer as a function of the substrate temperature. HDDA is a relatively volatile monomer with a molecular weight about 212. A less volatile monomer such as tripropylene glycol diacrylate with a molecular weight of about 300 has higher condensation efficiency.

An extreme amount of cooling of the substrate must also be avoided. For example, HDDA freezes on the substrate when the coating drum temperature is below about 0°C. The frozen monomer cannot be polymerized. Thus, the cooling temperature must hold the surface of the substrate above the freezing point of the monomer but below the temperature at which the condensation efficiency decreases significantly.

As an alternative to or in addition to precooling the roll of substrate the sheet can be cooled on the front surface preceding the evaporator. For example, the idler roll 42 between the payout reel and the first drum may be chilled for cooling the front surface of the substrate sheet before it reaches the first drum. Cooling the front face of the sheet, i.e. the face on which deposition is to occur can permit faster processing and permits cooling of sheets with a rough reverse surface.

Precooling of a sheet of material on which the acrylate is to be deposited can be significant for applications in addition to preparation of sheet material for winding capacitors. For example, there are times that it is desirable to coat paper with an acrylate and the rough surface of paper does not lend itself to cooling from the back surface on a rotating drum. In such a case, the flexible paper may be passed over a chilled roll to cool the front face of the paper. An acrylate is then deposited on the same face of the paper as was just cooled before the face heats any significant amount.

There may be embodiments where it is sufficient to deposit an oxygen barrier layer directly on the substrate and apply an acrylate layer over the oxygen barrier material. For example, when the thermoplastic substrate has been flame treated to smooth the surface sufficiently that a thin oxygen barrier material can bridge over any surface irregularities, the oxygen barrier material may be deposited directly on the flame treated substrate. An acrylate layer may then be applied over the oxygen barrier material to protect the barrier and further reduce permeability.

It is found particularly desirable to provide a protective crosslinked acrylate coating over a deposited layer of metal such as aluminum. If an aluminum layer is applied to a sheet substrate which is rolled for later use or which is passed over a roller contacting the surface, the aluminum may be abraded off of higher asperities on the surface. A sheet coated with aluminum and protected with an overlying crosslinked acrylate coating having a thickness of as little as 0.1 micrometer, the pinhole density can be maintained as low as 10 pinholes per cm².

When films used in packaging food products, cigarettes or many other items, the presence of an acrylate odor is unacceptable. Any such odor can be eliminated by curing any residual acrylate monomer on the film before it is removed from the vacuum chamber.

An electron gun 53 is mounted in the vacuum chamber between the final idler roll 42 and the take-up reel 41. Electron bombardment from the gun polymerizes any residual acrylate monomer on the surfaces of the film before it is rolled up. By irradiating in the converging space between the film on the take-up reel and the film advancing from the idler roll both faces of the film can be irradiated with a single electron gun.

A sheet capacitor is often constructed by winding two sheets of metallized plastic sheet together, with the metallized layer on one sheet being one electrode of the capacitor and the metallized layer on the other sheet being the other electrode. The two sheets are offset from each other so that at each end of the roll the edge of one sheet extends beyond the edge of the other sheet. The electrical contact to the two electrodes is made by way of the protruding edge of each electrode at opposite ends of the roll.

Molten zinc or lead-tin solder is then sprayed onto the ends of the roll (a process called Schooping) to establish electrical contact with the metallized layer. A connecting lead is either welded or soldered to the relatively thick contact material. The zinc or solder Schooping apparently enters between the metallized plastic sheets and may melt a portion of the sheet to make mechanical and electrical contact to the thin metallized layer on the sheet.

It is preferred to have a layer of polymerized acrylate overlying the metallized layer of the capacitor material. A layer of acrylate in the range of from about 0.1 to 1 micrometer thick has been found sufficient to prevent corrosion of a zinc electrode in a high humidity environment. Furthermore, the overlying layer of acrylate improves the scratch resistance of the metallized electrode. The electrode may be abraded during slitting of the metallized sheet or winding a capacitor. An overlying acrylate layer effectively prevents damage from such scratching. The overlying layer of acrylate also helps confine the tiny arc that occurs adjacent to a short, which increases its temperature for more efficiently evaporating the metal from around the shorted area. This, and the presence of oxygen in the acrylate material, enhance the self-healing of the capacitor.

FIG. 9 illustrates in a fragmentary transverse cross section a few layers of a preferred capacitor. Each of the layers of the capacitor comprises a substrate sheet 56 having a metallized layer 57 on one face. A layer 58 of polymerized acrylate is deposited over each metallized layer. A second acrylate layer 59 may deposited on the opposite face of each dielectric sheet 56 for isolating the sheet from dielectric capacitor liquid. A metal contact electrode 60 is sprayed onto each end of the roll of metallized sheets.

The edges of the two sheets forming the capacitor are offset from each other. Thus, at one end of the capacitor, the edge of one sheet A extends beyond the edge of the intervening sheet B which is recessed. At the opposite end of the capacitor the recessed sheet B extends beyond the edge of the interleaved sheet A. This permits electrical contact to be made to the metallized layers on the respective sheets at opposite ends of the capacitor.

In this embodiment the metallized layer on each sheet extends to one edge of the sheet and does not extend all the way to the opposite edge of the sheet. Thus, for example, as illustrated at the left edge of FIG. 9, the metallized layer extends all the way to the edge of the protruding sheets A. On the other hand, the metallized layer on the recessed sheets B stop short of the edge of the sheet. Because of this, when the contact metal 60 is sprayed onto the end of the roll, electrical contact can be made to the metallized layer on the protruding sheet and the metallized layer on the recessed sheet is electrically insulated by the plastic material.

Surprisingly, despite the substantially complete enclosure of the metallized layer by acrylate and polypropylene plastic, good electrical contact is made when the electrical contact is sprayed onto the end of the roll. It is believed that a small amount of thermoplastic dielectric sheet melts, thereby assuring good electrical contact with the metallized layer. Polypropylene has a melting temperature of about 165°C, and the cross linked acrylate does not melt. The metallized layer is, in effect, supported by the polymerized acrylate which resists higher temperatures.

## Claims

1. A method for forming a barrier with low oxygen and water permeability comprising the steps of:
providing a thermoplastic substrate;
depositing a first crosslinked evaporated acrylate layer, the first acrylate layer consisting essentially of a polymerization product of acrylate monomer having a molecular weight in the range of from 150 to 600;
vapour depositing a layer of barrier material selected from the group consisting of silicon oxide, aluminum oxide, silicon nitride, titanium nitride, aluminum nitride and combinations thereof, and metal; and
depositing a second crosslinked evaporated acrylate layer over the barrier layer, the second acrylate layer also consisting essentially of a polymerization product of acrylate monomer having a molecular weight in the range of from 150-600.

2. A method for forming a barrier according to Claim 1, wherein the substrate comprises a closable hollow container moulded from a thermoplastic selected from the group consisting of polypropylene, polyethylene, polyester and nylon, wherein the step of depositing the acrylate layers comprises dipping the closable hollow container into a liquid acrylate composition to form an encapsulated substrate wherein the acrylate layers are on the inside and the outside of the container, the inside and outside surfaces of the container being sufficiently smooth that the first acrylate layer is continuous.

3. The method for forming a barrier according to Claim 1, wherein the substrate comprises a closable hollow container moulded from a thermoplastic selected from the group consisting of polypropylene, polyethylene, polyester and nylon, and the crosslinked acrylate layers are on the outside of the container, the outside surface of the container being sufficiently smooth that the first acrylate layer is continuous.

4. The method for forming a barrier according to any one of Claims 1 to 3, wherein the depositing of the first crosslinked evaporated acrylate layer comprises the steps of:
plasma treating the surface of the thermoplastic substrate;
evaporating an acrylate monomer;
condensing such acrylate monomer on the treated face of the substrate as a monomer film; and
polymerizing the acrylate for forming a crosslinked acrylate layer.

5. The method according to any one of Claims 1 to 4, wherein the barrier material comprises a metal deposited over the acrylate layer and the depositing of the second crosslinked evaporated acrylate layer comprises the steps of:
evaporating an acrylate monomer;
condensing such acrylate monomer on the metal layer as a monomer film; and
polymerizing the acrylate for forming a second crosslinked acrylate layer.

6. The method for forming a barrier according to any one of Claims 1 to 5, wherein the depositing of the first crosslinked evaporated acrylate layer comprises the steps of:
plasma treating a surface of the thermoplastic substrate in a vacuum chamber, and immediately thereafter evaporating an acrylate monomer, the acrylate monomer containing at least a portion of polyfunctional acrylate monomer for forming a crosslinked acrylate layer, and condensing the acrylate monomer on the substrate as a monomer film; and
polymerizing the acrylate for forming a crosslinked acrylate layer.

7. The method according to either Claim 1 or Claim 6, wherein the depositing of the first crosslinked evaporated acrylate layer comprises the steps of:
chilling the thermoplastic substrate to a temperature below ambient temperature;
placing the chilled substrate in a vacuum chamber; and
condensing the acrylate monomer on the substrate while the substrate is still at a temperature below ambient temperature.

8. The method according to any one of Claims 1, 6 or 7, wherein the thermoplastic substrate comprises a flexible sheet film and comprising the steps of:
engaging a first face of the sheet with a chilled roller;
thereafter engaging the other face of the sheet with a chilled drum; and
rotating the drum past a deposition station for depositing acrylate monomer on the first face.

9. A method for forming a barrier with low oxygen and water permeability comprising the steps of:
providing a thermoplastic substrate;
depositing a first crosslinked evaporated acrylate, the first acrylate layer consisting essentially of fluorinated acrylates having a molecular weight in the range of from 400 to 3000;
vapour depositing a layer of barrier material selected from the group consisting of silicon oxide, aluminum oxide, silicon nitride, titanium nitride, aluminum nitride, and combinations thereof and metal; and
depositing a second crosslinked evaporated acrylate layer, the second acrylate layer consisting essentially of a polymerization product of one of a second acrylate monomer having a molecular weight in the range of from 150-600 and a second fluorinated acrylate having a molecular weight in the range of from 400 to 3000.

10. A method for forming a barrier according to Claim 9, wherein the substrate comprises a closable hollow container molded from a thermoplastic selected from the group consisting of polypropylene, polyethylene, polyester and nylon, and the crosslinked acrylate layers are on the outside of the container, the outside surface of the container being sufficiently smooth that the first acrylate layer is continuous.

11. A method for forming a barrier according to Claim 9 or 10, wherein the depositing of the first crosslinked evaporated acrylate layer comprises the steps of:
plasma treating the surface of the thermoplastic substrate;
evaporating an acrylate monomer;
condensing such acrylate monomer on the treated face of the substrate as a monomer film; and
polymerizing the acrylate for forming a crosslinked acrylate layer.

12. A method according to any one of Claims 9, 10 and 11, wherein the barrier material comprises a metal deposited over the acrylate layer and the depositing of the second crosslinked evaporated acrylate layer comprises the steps of:
evaporating an acrylate monomer;
condensing such acrylate monomer on the metal layer as a monomer film; and
polymerizing the acrylate for forming a second crosslinked acrylate layer.

13. A method for forming a barrier according to Claim 9 or 10, wherein the depositing of the first crosslinked evaporated acrylate layer comprises the steps of:
plasma treating a surface of the thermoplastic substrate in a vacuum chamber, and immediately thereafter evaporating an acrylate monomer, the acrylate monomer containing at least a portion of polyfunctional acrylate monomer for forming a crosslinked acrylate layer, and condensing the acrylate monomer on the substrate as a monomer film; and
polymerizing the acrylate for forming a crosslinked acrylate layer.

14. A method according to either Claim 9 or Claim 13, wherein the depositing of the first crosslinked evaporated acrylate layer comprises the steps of:
chilling the thermoplastic substrate to a temperature below ambient temperature;
placing the chilled substrate in a vacuum chamber; and
condensing the acrylate monomer on the substrate while the substrate is still at a temperature below ambient temperature.

15. A method according to any one of Claims 9, 13 or 14, wherein the thermoplastic substrate comprises a flexible sheet film and comprising the steps of:
engaging a first face of the sheet with a chilled roller;
thereafter engaging the other face of the sheet with a chilled drum; and
rotating the drum past a deposition station for depositing acrylate monomer on the first face.

16. A method for forming a barrier according to Claim 1 or 9, wherein one or more acrylate layers are deposited over a previously deposited barrier layer, respectively.

17. The method for forming a barrier according to Claim 1, wherein the depositing of the first crosslinked evaporated acrylate layer comprises the steps of:
evaporating a blend of acrylate monomers comprising at least one monomer having a molecular weight in the range of from 150 to 400 and an acrylate having a molecular weight more than 600;
condensing the acrylate monomer blend on the thermoplastic substrate as a monomer film; and
polymerizing the acrylate for forming a polymerized acrylate layer.

18. A method for forming a barrier according to Claim 1, comprising the additional step of vapour depositing a layer of barrier material over the second acrylate layer to form alternating barrier and acrylate layers.

19. A method for forming a barrier according to Claim 1, comprising the additional step of depositing a third crosslinked evaporated layer over a face of the substrate that is opposite a face upon which the second acrylate layer was deposited.

20. A method according to any one of the preceding claims, wherein the acrylate is a blend of acrylate monomers comprising at least one monomer having a molecular weight in the range of from 150 to 400 and an acrylate having a molecular weight of more than 600.

## Patentansprüche

1. Verfahren zum Herstellen einer Barriere mit geringer Sauerstoff- und Wasserpermeabilität, aufweisend die Schritte:
Vorsehen eines thermoplastischen Substrats;
Abscheiden einer ersten vernetzten, aufgedampften Acrylatschicht, wobei die erste Acrylatschicht im wesentlichen aus einem Polymerisationsprodukt eines Acrylatmonomers besteht, welches ein Molekulargewicht im Bereich von 150 bis 600 aufweist;
Dampfabscheidung einer Schicht eines Barriere-Materials, ausgewählt aus einer Gruppe, welche besteht aus Siliciumoxid, Aluminiumoxid, Siliciumnitrid, Titannitrid, Aluminiumnitrid, und Kombinationen hiervon, und aus Metall; und
Abscheiden einer zweiten vernetzten, aufgedampften Acrylatschicht über der Barriere-Schicht, wobei die zweite Acrylatschicht auch im wesentlichen aus einem Polymerisationsprodukt eines Acrylatmonomers besteht, welches ein Molekulargewicht im Bereich von 150 bis 600 aufweist.

2. Verfahren zum Herstellen einer Barriere nach Anspruch 1, in welchem das Substrat ein schließbares Hohlbehältnis umfaßt, geformt aus einem Thermoplasten, der aus der Gruppe ausgewählt ist, die aus Polypropylen, Polyethylen, Polyester und Nylon besteht, wobei der Schritt der Abscheidung der Acrylatschichten das Eintauchen des schließbaren Hohlbehältnisses in eine flüssige Acrylatzusammensetzung zur Ausbildung eines eingekapselten Substrats umfaßt, in welchem die Acrylatschichten auf der Innenseite und Außenseite des Behältnisses vorliegen, wobei die innere und äußere Oberfläche des Behältnisses ausreichend glatt sind, so daß die erste Acrylatschicht kontinuierlich ist.

3. Verfahren zum Herstellen einer Barriere nach Anspruch 1, in welchem das Substrat ein schließbares Hohlbehältnis umfaßt, geformt aus einem Thermoplasten, der aus der Gruppe ausgewählt ist, die aus Polypropylen, Polyethylen, Polyester und Nylon besteht, und die vernetzten Acrylatschichten auf der Außenseite des Behältnisses liegen, wobei die äußere Oberfläche des Behältnisses ausreichend glatt ist, so daß die erste Acrylatschicht kontinuierlich ist.

4. Verfahren zum Herstellen einer Barriere nach einem der Ansprüche 1 bis 3, in welchem das Abscheiden der ersten vernetzten, aufgedampften Acrlatschicht die Schritte umfaßt:
ein Plasmabehandeln der Oberfläche des thermoplastischen Substrats;
Verdampfen eines Acrylatmonomers;
Kondensierenlassen solchen Acrylatmonomers auf der behandelten Fläche des Substrats als ein Monomerfilm; und
Polymerisieren des Acrylats zur Ausbildung einer vernetzten Acrylatschicht.

5. Verfahren nach einem der Ansprüche 1 bis 4, in welchem das Barriere-Material ein Metall umfaßt, das über der Acrylatschicht abgeschieden wird, und die Abscheidung der zweiten vernetzten, aufgedampften Acrylatschicht die Schritte umfaßt:
Verdampfen eines Acrylatmonomers;
Kondensierenlassen solchen Acrylatmonomers auf der Metallschicht als ein Monomerfilm; und
Polymerisieren des Acrylats zur Ausbildung einer zweiten vernetzten Acrylatschicht.

6. Verfahren zum Herstellen einer Barriere nach einem der Ansprüche 1 bis 5, in welchem die Abscheidung der ersten vernetzten, aufgedampfen Acrylatschicht die Schritte umfaßt:
Plasmabehandeln einer Oberfläche des thermoplastischen Substrats in einer Vakuumkammer und unmittelbar anschließendes Verdampfen eines Acrylatmonomers, wobei das Acrylatmonomer zumindest einen Teil eines polyfunktionellen Acrylatmonomers enthält, um eine vernetzte Acrylatschicht zu bilden, und Kondensierenlassen des Acrylatmonomers auf dem Substrat als ein Monomerfilm; und
Polymerisieren des Acrylats zur Ausbildung einer vernetzten Acrlatschicht.

7. Verfahren nach Anspruch 1 oder Anspruch 6, in welchem die Abscheidung der ersten vernetzten, aufgedampften Acrylatschicht die Schritte umfaßt:
Abkühlen des thermoplastischen Substrats auf eine Temperatur unterhalb Umgebungstemperatur;
Plazieren des abgekühlten Substrats in einer Vakuumkammer; und
Kondensierenlassen des Acrylatmonomers auf dem Substrat, während sich das Substrat noch auf einer Temperatur unterhalb Umgebungstemperatur befindet.

8. Verfahren nach einem der Ansprüche 1, 6 oder 7, in welchem das thermoplastische Substrat eine flexible Schichtlage umfaßt, und welches die Schritte aufweist:
Inkontaktbringen einer Seite der Lage mit einer abgekühlten Rolle;
darauffolgendes Inkontaktbringen der anderen Seite der Lage mit einer abgekühlten Trommel; und
Drehen der Trommel an einer Abscheidungsstation vorbei zur Abscheidung eines Acrylatmonomers auf der ersten Seite.

9. Verfahren zum Herstellen einer Barriere mit geringer Sauerstoff- und Wasserpermeabilität, aufweisend die Schritte:
Vorsehen eines thermoplastischen Substrats;
Abscheiden eines ersten vernetzten, verdampften Acrylats, wobei die erste Acrylatschicht im wesentlichen aus fluorierten Acrylaten besteht, die ein Molekulargewicht im Bereich von 400 bis 3000 aufweisen;
Dampfabscheidung einer Schicht eines Barriere-Materials, ausgewählt aus der Gruppe, die besteht aus Siliciumoxid, Aluminiumoxid, Siliciumnitrid, Titannitrid, Aluminiumnitrid und Kombinationen hiervon, und aus Metall; und
Abscheiden einer zweiten vernetzten, aufgedampften Acrylatschicht, wobei die zweite Acrylatschicht im wesentlichen aus einem Polymerisationsprodukt aus einem von einem zweiten Acrylatmonomer, welches ein Molekulargewicht im Bereich von 150 bis 600 aufweist, und von einem zweiten fluoriertem Acrylat besteht, welches ein Molekulargewicht im Bereich von 400 bis 3000 aufweist.

10. Verfahren zum Herstellen einer Barriere nach Anspruch 9, in welchem das Substrat ein schließbares Hohlbehältnis umfaßt, geformt aus einem Thermoplasten, welcher aus der Gruppe ausgewählt ist, die aus Polypropylen, Polyethylen, Polyester und Nylon besteht, und die vernetzten Acrylatschichten auf der Außenseite des Behältnissen liegen, wobei die äußere Oberfläche des Behältnisses ausreichend glatt ist, so daß die erste Acrylatschicht kontinuierlich ist.

11. Verfahren zum Herstellen einer Barriere nach Anspruch 9 oder 10, in welchem das Abscheiden der ersten vemetzten, aufgedampften Acrylatschicht die Schritte umfaßt:
Plasmabehandeln der Oberfläche des thermoplastischen Substrats;
Verdampfen eines Acrylatmonomers;
Kondensierenlassen solchen Acrylatmonomers auf der behandelten Seite des Substrats als ein Monomerfilm; und
Polymerisieren des Acrylats zur Ausbildung einer vernetzten Acrylatschicht.

12. Verfahren nach einem der Ansprüche 9, 10 und 11, in welchem das Barriere-Material ein Metall umfaßt, das über der Acrylatschicht abgeschieden wird, und die Abscheidung der zweiten vernetzten, aufgedampften Acrylatschicht die Schritte umfaßt:
Verdampfen eines Acrylatmonomers;
Kondensierenlassen solchen Acrylatmonomers auf der Metallschicht als ein Monomerfilm; und
Polymerisieren des Acrylats zur Ausbildung einer zweiten vernetzten Acrylatschicht.

13. Verfahren zum Herstellen einer Barriere nach Anspruch 9 oder 10, in welchem die Abscheidung der ersten vernetzten, aufgedampften, Acrylatschicht die Schritte umfaßt:
Plasmabehandlung einer Oberfläche des thermoplastischen Substrats in einer Vakuumkammer und unmittelbar anschließendes Verdampfen eines Acrylatmonomers, wobei das Acrylatmonomer zumindest einen Teil eines polyfunktionellen Acrylatmonomers enthält, um eine vernetzte Acrylatschicht zu bilden, und Kondensierenlassen des Acrylatmonomers auf dem Substrat als ein Monomerfilm; und
Polymerisieren des Acrylats zur Ausbildung einer vernetzten Acrlatschicht.

14. Verfahren nach Anspruch 9 oder Anspruch 13, in welchem das Abscheiden der ersten vernetzten, aufgedampften Acrylatschicht die Schritte umfaßt:
Abkühlen des thermoplastischen Substrats auf eine Temperatur unter Umgebungstemperatur;
Plazieren des abgekühlten Substrats in einer Vakuumkammer; und
Kondensierenlassen des Acrylatmonomers auf dem Substrat, während das Substrat sich noch auf einer Temperatur unterhalb Umgebungstemperatur befindet.

15. Verfahren nach einem der Ansprüche 9, 13 oder 14, in welchem das thermoplastische Substrat eine flexible Schichtlage umfaßt und welches die Schritte beinhaltet:
Inkontaktbringen einer ersten Seite der Lage mit einer abgekühlten Rolle;
darauffolgendes Inkontaktbringen der anderen Seite der Lage mit einer abgekühlten Trommel; und
Drehen der Trommel an einer Abscheidungsstation vorbei zur Abscheidung eines Acrylatmonomers auf der ersten Seite.

16. Verfahren zum Herstellen einer Barriere nach Anspruch 1 oder 9, in welchem eine oder mehrere Acrylatschichten über jeweils einer zuvor abgeschiedenen Barriere-Schicht abgeschieden werden.

17. Verfahren zum Herstellen einer Barriere nach Anspruch 1, in welchem das Abscheiden der ersten vernetzten, aufgedampften Acrylatschicht die Schritte umfaßt:
Verdampfen eines Blends aus Acrylatmonomeren, die zumindest ein Monomer, welches ein Molekulargewicht im Bereich von 150 bis 400 aufweist, und ein Acrylat umfassen, welches ein Molekulargewicht von mehr als 600 aufweist;
Kondensierenlassen des Acrylatmonomer-Blends auf dem thermoplastischen Substrat als ein Monomerfilm; und
Polymerisieren des Acrylats zur Ausbildung einer polymerisierten Acrylatschicht.

18. Verfahren zum Herstellen einer Barriere nach Anspruch 1, aufweisend den zusätzlichen Schritt einer Dampfabscheidung einer Schicht aus Barriere-Material über der zweiten Acrylatschicht zur Ausbildung alternierender Barriere- und Acrylatschichten.

19. Verfahren zum Herstellen einer Barriere nach Anspruch 1, aufweisend den zusätzlichen Schritt einer Abscheidung einer dritten vernetzten, aufgedampften Schicht über einer Seite des Substrats, die entgegengesetzt zu einer Seite ist, auf der die zweite Acrylatschicht abgeschieden wurde.

20. Verfahren nach einem der vorhergehenden Ansprüche, in welchem das Acrylat eine Blend aus Acrylatmonomeren ist, die zumindest ein Monomer, welches ein Molekulargewicht im Bereich von 150 bis 400 aufweist, und ein Acrylat umfassen, welches ein Molekulargewicht von mehr als 600 aufweist.

## Revendications

1. Procédé pour former une barrière présentant une faible perméabilité à l'oxygène et à l'eau, comprenant les étapes consistant à :
fournir un substrat thermoplastique ;
déposer une première couche d'acrylate évaporé réticulé, la première couche d'acrylate étant essentiellement constituée d'un produit de polymérisation d'un monomère d'acrylate présentant une masse moléculaire dans la plage allant de 150 à 600 ; déposer en phase vapeur une couche de matériau-barrière choisi dans le groupe constitué de l'oxyde de silicium, de l'oxyde d'aluminium, du nitrure de silicium, du nitrure de titane, du nitrure d'aluminium et des combinaisons de ceux-ci, et de métal ; et
déposer une deuxième couche d'acrylate évaporé réticulé sur la couche barrière, la deuxième couche d'acrylate étant également essentiellement constituée d'un produit de polymérisation d'un monomère d'acrylate, présentant une masse moléculaire dans la plage allant de 150 à 600.

2. Procédé pour former une barrière selon la revendication 1, dans lequel le substrat comprend un récipient creux refermable moulé à partir d'un thermoplastique choisi dans le groupe constitué du polypropylène, du polyéthylène, du polyester et du nylon, dans lequel l'étape consistant à déposer les couches d'acrylate comprend le fait de plonger le récipient creux refermable dans une composition d'acrylate liquide pour former un substrat encapsulé, dans lequel les couches d'acrylate se trouvent sur l'intérieur et l'extérieur du récipient, les surfaces intérieure et extérieure du récipient étant suffisamment lisses pour que la première couche d'acrylate soit continue.

3. Procédé pour former une barrière selon la revendication 1, dans lequel le substrat comprend un récipient creux refermable moulé à partir d'un thermoplastique choisi dans le groupe constitué du polypropylène, du polyéthylène, du polyester et du nylon, et les couches d'acrylate réticulé se trouvent sur l'extérieur du récipient, la surface extérieure du récipient étant suffisamment lisse pour que la première couche d'acrylate soit continue.

4. Procédé pour former une barrière selon l'une quelconque des revendications 1 à 3, dans lequel le dépôt de la première couche d'acrylate évaporé réticulé comprend les étapes consistant à :
traiter au plasma la surface du substrat thermoplastique ;
faire s'évaporer un monomère d'acrylate ;
condenser ce monomère d'acrylate sur la face traitée du substrat sous la forme d'un film de monomère ; et
polymériser l'acrylate pour former une couche d'acrylate réticulé.

5. Procédé selon l'une quelconque des revendications 1 à 4, dans lequel le matériau-barrière comprend un métal déposé sur la couche d'acrylate et le dépôt de la deuxième couche d'acrylate évaporé réticulé comprend les étapes consistant à :
faire s'évaporer un monomère d'acrylate ; condenser ce monomère d'acrylate sur la couche métallique sous la forme d'un film de monomère ; et polymériser l'acrylate pour former une deuxième couche d'acrylate réticulé.

6. Procédé pour former une barrière selon l'une quelconque des revendications 1 à 5, dans lequel le dépôt de la première couche d'acrylate évaporé réticulé comprend les étapes consistant à :
traiter au plasma une surface du substrat thermoplastique dans une chambre à vide, et immédiatement après, faire s'évaporer un monomère d'acrylate, le monomère d'acrylate contenant au moins une partie du monomère d'acrylate polyfonctionnel pour former la couche d'acrylate réticulé, et condenser le monomère d'acrylate sur le substrat sous la forme d'un film de monomère ; et
polymériser l'acrylate pour former une couche d'acrylate réticulé.

7. Procédé selon la revendication 1 ou la revendication 6, dans lequel le dépôt de la première couche d'acrylate évaporé réticulé comprend les étapes consistant à :
refroidir le substrat thermoplastique jusqu'à une température inférieure à la température ambiante ; placer le substrat refroidi dans une chambre à vide ; et condenser le monomère d'acrylate sur le substrat alors que le substrat est encore à une température inférieure à la température ambiante.

8. Procédé selon l'une quelconque des revendications 1, 6 ou 7, dans lequel le substrat thermoplastique comprend un film en feuille souple, et comprenant les étapes consistant à :
mettre en contact une première face de la feuille avec un rouleau refroidi ;
ensuite, mettre en contact l'autre face de la feuille avec un tambour refroidi, et faire tourner le tambour devant un poste de dépôt pour déposer le monomère d'acrylate sur la première face.

9. Procédé pour former une barrière avec une faible perméabilité à l'oxygène et à l'eau, comprenant les étapes consistant à :
fournir un substrat thermoplastique ; déposer un premier acrylate évaporé réticulé, la première couche d'acrylate étant essentiellement constituée d'acrylates fluorés présentant une masse moléculaire dans la plage allant de 400 à 3 000 ; déposer en phase vapeur une couche de matériau-barrière choisi dans le groupe constitué de l'oxyde de silicium, de l'oxyde d'aluminium, du nitrure de silicium, du nitrure de titane, du nitrure d'aluminium, et des combinaisons de ceux-ci et de métal ; et
déposer une deuxième couche d'acrylate évaporé réticulé, la deuxième couche d'acrylate étant essentiellement constituée d'un produit de polymérisation d'au moins un deuxième monomère d'acrylate présentant une masse moléculaire dans la plage allant de 150 à 600 et un deuxième acrylate fluoré présentant une masse moléculaire dans la plage allant de 400 à 3 000.

10. Procédé pour former une barrière selon la revendication 9, dans laquelle le substrat comprend un récipient creux refermable moulé à partir d'un thermoplastique choisi dans le groupe constitué du polypropylène, du polyéthylène, du polyester et du nylon, et les couches d'acrylate réticulé se trouvent sur l'extérieur du récipient, la surface extérieure étant suffisamment lisse pour que la première couche d'acrylate soit continue.

11. Procédé pour former une barrière selon la revendication 9 ou la revendication 10, dans lequel le dépôt de la première couche d'acrylate évaporé réticulé comprend les étapes consistant à :
traiter au plasma la surface du substrat thermoplastique ;
faire s'évaporer un monomère d'acrylate ;
condenser ce monomère d'acrylate sur la face traitée du substrat sous la forme d'un film de monomère ; et
polymériser l'acrylate pour former une couche d'acrylate réticulé.

12. Procédé selon l'une quelconque des revendications 9, 10 et 11, dans lequel le matériau-barrière comprend un métal déposé sur la couche d'acrylate et le dépôt de la deuxième couche d'acrylate réticulé comprend les étapes consistant à :
faire s'évaporer un monomère d'acrylate ;
condenser ce monomère d'acrylate sur la couche métallique sous la forme d'un film de monomère ; et
polymériser l'acrylate pour former une deuxième couche d'acrylate réticulé.

13. Procédé pour former une barrière selon la revendication 9 ou la revendication 10, dans lequel le dépôt de la première couche d'acrylate évaporé réticulé comprend les étapes consistant à :
traiter au plasma une surface du substrat thermoplastique dans une chambre à vide, et immédiatement après, faire s'évaporer un monomère d'acrylate, le monomère d'acrylate contenant au moins une partie du monomère d'acrylate polyfonctionnel pour former une couche d'acrylate réticulé, et condenser le monomère d'acrylate sur la substrat sous la forme d'un film de monomère ; et
polymériser l'acrylate pour former une couche d'acrylate réticulé.

14. Procédé selon la revendication 9 ou la revendication 13, dans lequel le dépôt de la première couche d'acrylate évaporé réticulé comprend les étapes consistant à :
refroidir le substrat thermoplastique jusqu'à une température inférieure à la température ambiante ; placer le substrat refroidi dans une chambre à vide ; et
condenser le monomère d'acrylate sur le substrat alors que le substrat est encore à une température inférieure à la température ambiante.

15. Procédé selon l'une quelconque des revendications 9, 13 ou 14, dans lequel le substrat thermoplastique comprend un film en feuille souple et comprenant les étapes consistant à :
mettre en contact une première face de la feuille avec un rouleau refroidi ;
ensuite mettre en contact l'autre face de la feuille avec un tambour refroidi ; et
faire tourner le tambour devant un poste de dépôt pour déposer un monomère d'acrylate sur la première face.

16. Procédé pour former une barrière selon la revendication 1 ou 9, dans lequel une ou plusieurs couches d'acrylate est (sont) déposée(s) sur une couche barrière déposée au préalable, respectivement.

17. Procédé pour former une barrière selon la revendication 1, dans lequel le dépôt de la première couche d'acrylate évaporé réticulé comprend les étapes consistant à :
faire s'évaporer un mélange de monomères d'acrylate comprenant au moins un monomère présentant une masse moléculaire dans la plage allant de 150 à 400 et un acrylate présentant une masse moléculaire supérieure à 600 ;
condenser le mélange de monomères d'acrylate sur le substrat thermoplastique sous la forme d'un film de monomère ; et polymériser l'acrylate pour former une couche d'acrylate polymérisé.

18. Procédé pour former une barrière selon la revendication 1, comprenant l'étape supplémentaire consistant à déposer en phase vapeur une couche de matériau-barrière sur la deuxième couche d'acrylate pour former des couches alternées barrière et acrylate.

19. Procédé pour former une barrière selon la revendication 1, comprenant l'étape supplémentaire consistant à déposer une troisième couche évaporée réticulée sur une face du substrat qui est opposée à une face sur laquelle a été déposée la deuxième couche d'acrylate.

20. Procédé selon l'une quelconque des revendications précédentes, dans lequel l'acrylate est un mélange de monomères d'acrylate comprenant au moins un monomère présentant une masse moléculaire dans la plage allant de 150 à 400 et un acrylate présentant une masse moléculaire supérieure à 600.
